# EUROPEAN PATENT APPLICATION

(11) **EP 3 023 909 A1**
(43) Date of publication of application: **25.05.2016**
(21) Application number: 14306828.6
(22) Date of filing: 18.11.2014
(51) Int. Cl.: G06K 9/00

(54) **Method and apparatus for ranking 2D candidate images**

(71) Applicant: Thomson Licensing, 92130 Issy-les-Moulineaux (FR)
(72) Inventor: Guermoud, Hassane, 35576 Cesson-Sévigné (FR); Sharma, Gaurav, 35576 Cesson-Sévigné (FR); Zepeda Salvatierra, Joaquin, 35576 Cesson-Sévigné (FR)
(74) Representative: Huchet, Anne

(57) **Abstract**

Provided are method and apparatus for ranking a 2D candidate image for an object. The method comprises: comparing (210) the 2D candidate image with at least one 2D projection extracted from a 3D model of the object; and removing (230) the 2D candidate image when the 2D candidate image does not match (220) with any of the at least one 2D projection. False positives in the 2D candidate images may be removed by the image matching detection, and thus performance of image searching function is improved.

## Description

### TECHNICAL FIELD

The present disclosure relates to image ranking, and particularly to a method and apparatus for ranking a 2D candidate image for a target object.

### BACKGROUND

Currently, most of searching engines can return image searching results based on a searching text query submitted by a user. Unfortunately, the returned image searching results often contain images (false positives) which are actually not corresponding to the searching text query submitted by the user. The user may get confused with the returned image searching results, and even cannot identify images (true positives) which are actually corresponding to the searching text query submitted by the user from images of the false positives.

A popular retrieval mechanism used by some searching engines lies on text matching between the searching text query submitted by the user and a tag included in the metadata associated with available images. As commonly known, a tag included in the metadata associated with an image of an object may be used to describe features shown in the image of the object, or may be used to describe the difference between features shown in the image and features of another object. Therefore, in the latter case, the popular retrieval mechanism may return images which are not actually corresponding to the searching text query submitted by the user, that is, false positives are shown in the image searching results.

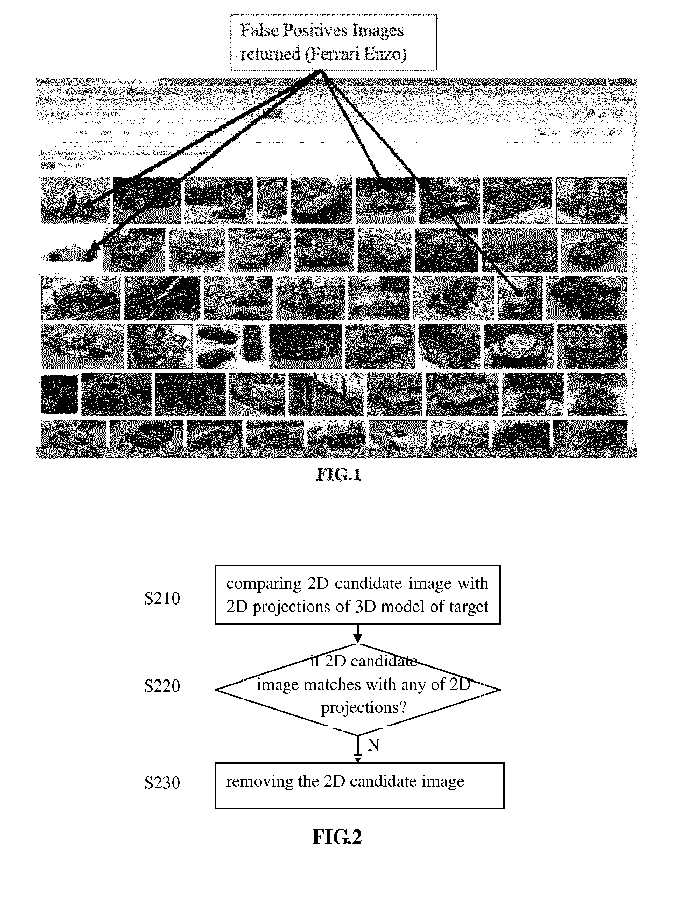

As shown in Fig.1, a user submitted a searching text query "Ferrari F50" in Google Images searching engine. After performing search with the popular text matching retrieval mechanism, the Google Images searching engine returns some images as pointed out by arrows in Fig. 1 which actually correspond to a "Ferrari Enzo" car rather than the submitted searching text query "Ferrari F50". Under these circumstance, some images of the "Ferrari F50" car were presented together with images of the "Ferrari Enzo" car, and the user got confused and could not identify the images actually corresponding to his/her submitted searching text query. Therefore, it is necessary to rank the returned images again to avoid confusion.

Further, in other image searching tools, such as intranet image searching engines and local image searching tools, the same problem may occur as long as the text matching mechanism is used.

### SUMMARY

Aiming to solve the above problem, a method and apparatus for ranking a 2D candidate image for a target object are proposed to remove false positives from all 2D candidate images based on 2D projections of 3D model of the object according to the present disclosure.

According to one aspect of embodiments of the present disclosure, there is provided a method for ranking a 2D candidate image for an object comprising: comparing the 2D candidate image with 2D projections extracted from a 3D model of the object; and removing the 2D candidate image when the 2D candidate image does not match with any of the 2D projections.

In an example, before said comparing, the method further comprises: extracting 2D projections of the 3D model of the object from a first selected range of points of view.

In another example, said comparing the 2D candidate image with the 2D projections comprises: training a classifier based on the 2D projections; and applying the classifier to detect any of the 2D projections on the 2D candidate image.

In another example, said applying the classifier to detect any of the 2D projections on the 2D candidate image comprises: setting the classifier based on a second selected range of points of view, wherein the second selected range is narrower than the first selected range.

According to another aspect of the embodiments of the present disclosure, there is provided an apparatus for ranking a 2D candidate image for an object comprising: a comparing module for comparing the 2D candidate image with 2D projections extracted from a 3D model of the object; and a removing module for removing the 2D candidate image when the 2D candidate image does not match with any of the 2D projections.

In an example, the apparatus further comprises: an extracting module for extracting the 2D projections of the 3D model of the object from a selected range of points of view.

In another example, said comparing module for comparing the 2D candidate image with the 2D projections comprises: a training module for training a classifier based on the 2D projections; and the classifier for detect any of the 2D projections on the 2D candidate image.

In another example, the 3D model of the object comprises at least one of 3D model of the object as a whole and 3D model of a constituent part of the object, each of the 3D models comprises at least one of exterior 3D model, structural 3D model and interior 3D model.

In another example, said classifier is a support vector machine (SVM) classifier.

In another example, said 2D candidate image is returned by a searching tool which retrieves the 2D candidate image based on text matching between a searching text query submitted by a user and a tag included in metadata associated with available 2D candidate images.

In another example, said searching tool is at least one of internet searching engine, intranet searching engine, and local searching software.

According to another aspect of the embodiments of the present disclosure, there is further provided a computer program product downloadable from a communication network and/or recorded on a medium readable by computer and/or executable by a processor, comprising program code instructions for implementing steps of any one of the above methods.

According to another aspect of the embodiments of the present disclosure, there is further provided a non-transitory computer-readable medium comprising a computer program product recorded thereon and capable of being run by a processor, including program code instructions for implementing steps of any one of the above methods.

According to the embodiments of the present disclosure, the 2D candidate images for the object may be pruned according to the 3D model of the object, particularly according to the 2D projections of the 3D model of the object. Therefore, false positives retrieved based on the text matching searching mechanism may be removed, and thus performance of image searching function is improved. Additionally, the 2D candidate images for the object may be further pruned based on the additional requirements of an end user. Therefore, the image searching function is more flexible and thus can accommodate different usages.

### BRIEF DESCRIPTION OF THE DRAWINGS

In order to more clearly describe the technical solutions of the embodiments of the present disclosure or the prior art, drawings necessary for describing the embodiments of the present disclosure or the prior art are simply introduced as follows. It should be obvious for those skilled in the art that the drawings described as follows only illustrate some embodiments of the present disclosure and other drawings can be obtained according to these drawings without paying any inventive efforts.
Fig.1 is an exemplary webpage showing image searching results returned by Google Images in prior art;
Fig.2 is a schematic flowchart of a method for ranking a 2D candidate image for a target object according to embodiments of the present disclosure;
Fig.3 is a schematic coordinate graph showing an azimuth, an elevation and a distance according to embodiments of the present disclosure;
Fig.4 is a schematic view showing several 2D projections obtained from several points of view according to the embodiments of the present disclosure;
Fig.5 is an exemplary webpage showing image searching results after applying the method according to the embodiments of the present disclosure;
Fig.6 is a schematic flowchart of process for comparing a 2D candidate image with 2D projections according to the embodiments of the present disclosure;
Fig.7 is a schematic flowchart of process for training a classifier according to the embodiments of the present disclosure;
Fig.8 is a schematic view of a whole process of 2D images pruning according to the embodiments of the present disclosure;
Fig.9 is a schematic view of another whole process of 2D images pruning according to the embodiments of the present disclosure;
Fig.10 is a schematic flowchart of a method for returning 2D images based on text matching searching mechanism and 2D projection matching detecting mechanism performed by an internet searching engine according to the embodiments of the present disclosure; and
Fig.11 is a schematic block diagram of an apparatus for ranking a 2D candidate image for a target object according to embodiments of the present disclosure.

### DETAILED DESCRIPTION OF THE PREFERRED EMBODIMENTS

To illustrate the technical solutions of embodiments of the present disclosure clearly and fully, hereinafter, detailed descriptions will be made to the embodiments of the present disclosure in connection with the accompanying drawings. Obviously, the embodiments as described are only a part of the embodiments of the present disclosure, and are not all the embodiments of the present disclosure. All the other embodiments which are obtained by those skilled in the art based on the embodiments of the present disclosure without paying any inventive labor fall into the protection of the present disclosure.

Fig.2 is a schematic flowchart of a method for ranking a 2D candidate image for a target object among all 2D candidate images returned by a searching result according to embodiments of the present disclosure.

At step S210, the 2D candidate image is compared with 2D projections extracted from a 3D model of the target object.

Here, description is given with the presumption that the 2D projections are already obtained through various ways. For example, the 2D candidate image may be returned by a searching tool which retrieves the 2D candidate image based on text matching between a searching text query submitted by a user and a tag included in metadata associated with available 2D candidate images, and the searching tool may be at least one of Internet searching engine, intranet searching engine, and local searching software. The exemplary ways for obtaining the 2D projections are described merely for the purpose of clarifying the present disclosure, and the present disclosure should not be construed as being limited to the listed exemplary ways.

For a same text query "Ferrari F50" to which the 2D candidate image responds, the target object should be a real "Ferrari F50" car. In this case, a 3D model of the real "Ferrari F50" may be obtained from a public database (for example, an end user may use this way) or a private database owned by the Ferrari company (for example, designer or manufacturer of Ferrari company or others associated with Ferrari company may use this way), or may be established by the searching engine such as "Google images". It should be noted that the present disclosure does not care about the manner in which the 3D model is obtained.

Here, the 3D model of the target object may comprise 3D model of the target object as a whole (whole appearance of the target object) and 3D model of a constituent part of the target object. Taking the "Ferrari F50" car as the target object, the 3D model of the car as a whole may be the 3D model of a whole appearance of the car, and the 3D model of a constituent part of the car may include, but not is limited to, the 3D model of the steering wheel, the instrument panel, the driver seat, the engine of the car.

In addition, no matter with the 3D model of the whole target object or the 3D model of a constituent part of the target object, the 3D model may be exterior 3D model such as the 3D model of the whole appearance of the target object, may be structural 3D model such as the configuration of the steering wheel and the instrument panel, or may be interior 3D model such as the cabin of the car or the interior structure of the engine of the car.

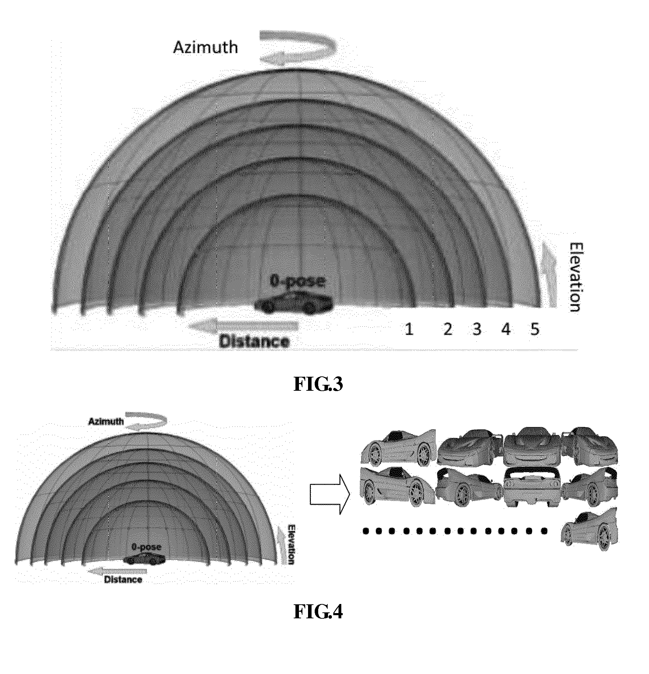

After a 3D model being obtained, 2D projections of the 3D model may be extracted from a first selected range of points of view. The extraction of the 2D projections of the 3D model may be performed before the step S210 or as a partial of the step S210. For example, the point of view is defined by parameters of an azimuth, an elevation and a distance. Fig.3 is a schematic coordinate graph showing the azimuth and the elevation. It can be seen from Fig.3 that any point on the circle 1 represents a same elevation, any point on the circle 2 represents a same elevation, and any point on the circle 3 represents a same elevation, and so on.

The first selected range of points of view may be defined as a particular elevation, a particular distance and a range of azimuth which may be many discrete points in a whole angle range from 0° to 360° or a partial angle range. Fig.4 is a schematic view showing several 2D projections obtained at several points of view.

Therefore, at this step S210, the 2D candidate image returned for a text query is compared with the obtained 2D projections extracted from the 3D model of a target object corresponding to the text query.

At step S220, it is determined whether the 2D candidate image matches with any one of the 2D projections.

The image matching detection may be performed based on a preset matching rate value. That is, when the matching rate between the 2D candidate image and any of the 2D projections is higher than the predefined matching rate value, it can be determined that the image matching is found.

Additionally or alternatively, when a first preset percentage value of the 2D candidate image matches with a second preset percentage of any of the 2D projections, it can also be determined that the image matching is found.

Alternatively, when a preset percentage value of any of the 2D projections is included in the 2D candidate image, it can also be determined that the image matching is found.

Alternatively, when a preset percentage value of the 2D candidate image is included in any of the 2D projections, it can also be determined that the image matching is found.

When the image matching is found, the 2D candidate image is shown in the final searching result.

If it is determined that the 2D candidate image does not match with at least one of the 2D projections, the method according to the embodiment of the present disclosure moves to step S230.

At step S230, the 2D candidate image is removed from being identified as a 2D image of the target object.

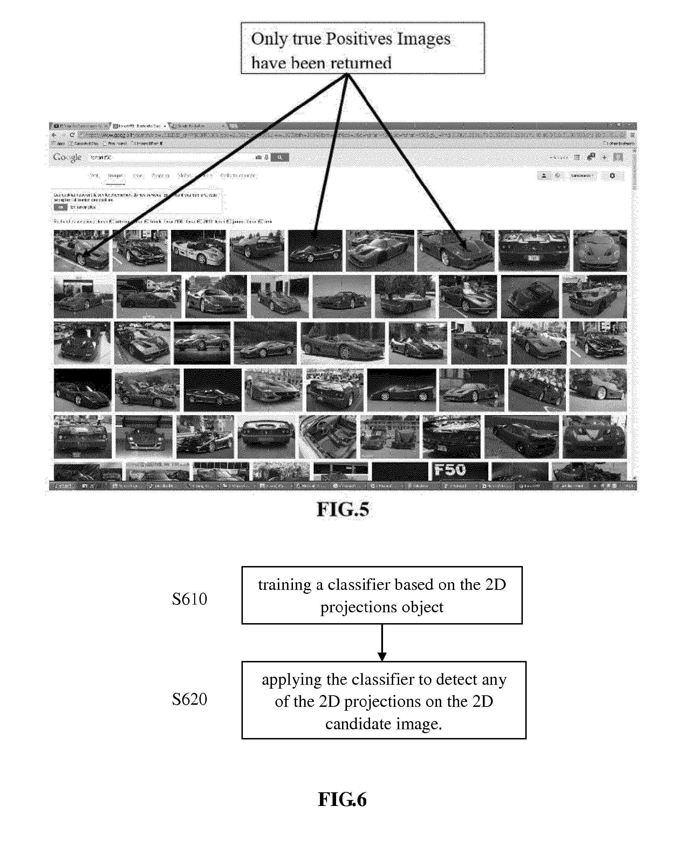

Fig.5 is an exemplary webpage showing image searching results after applying the method according to the embodiments of the present disclosure to prune the 2D images which do not actually respond to the submitted searching text query. It can be seen from Fig.5 that only images actually corresponding to the submitted searching text query are presented. That is, only the true positives images are presented while the false positives images are removed as compared to Fig.1.

Fig.6 is a detailed flowchart of the step S210 in Fig.2.

At step S610, a classifier is trained based on the 2D projections of the 3D model of a target object. For example, the classifier may be a support vector machine (SVM) classifier.

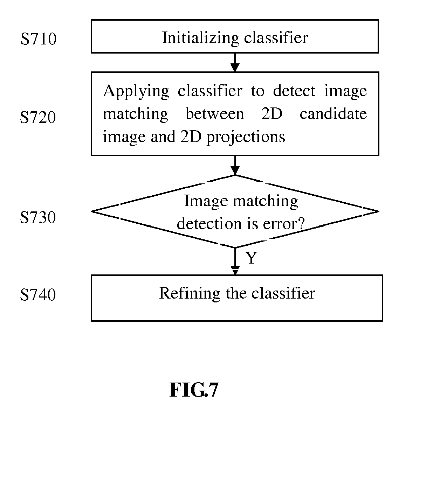

Here, the training of the classifier may be preformed online or offline. The training of the classifier will be described below with reference to Fig.7.

At step S620, the classifier is applied or used to detect image matching between the 2D candidate image and any of the 2D projections. For example, the classifier may be applied to detect the features of the target object on the 2D candidate image. Here, the operation of the classifier may follow the similar rule described in the step S210.

Fig.7 is a detailed flowchart of process for training the classifier.

At step S710, a classifier is initialized based on the 2D projections of the 3D model of a target object.

At step S720, the classifier is applied to detect image matching between the 2D candidate image and any of the 2D projections. For example, the classifier may be applied to detect the features of the target object on the 2D candidate image. Here, the operation of the classifier may follow the similar rule described in the step S210. Initially, the classifier may generate some error results in the matching detection.

At step S730, it is judged or determined whether the result of the step S720 is correct. The judgment may be obtained online or offline, and may be made by a staff of a company or organization responsible for the target object, or a staff of an internet/intranet searching engine. Additionally, an end user may also feedback the judgment to the company or organization responsible for the target object or the internet/intranet searching engine. If the result of the step S720 is error, then the process moves to step S740.

At step S740, the classifier is refined to improve the performance thereof.

For another 2D candidate, steps S720-S740 are performed repeatedly so as to further refine the classifier.

Finally, the classifier is trained not only based on the 2D projections, but also based on the 2D candidate images and the result of matching detection of the classifier.

After the classifier is successfully trained, it can also be used to online or offline.

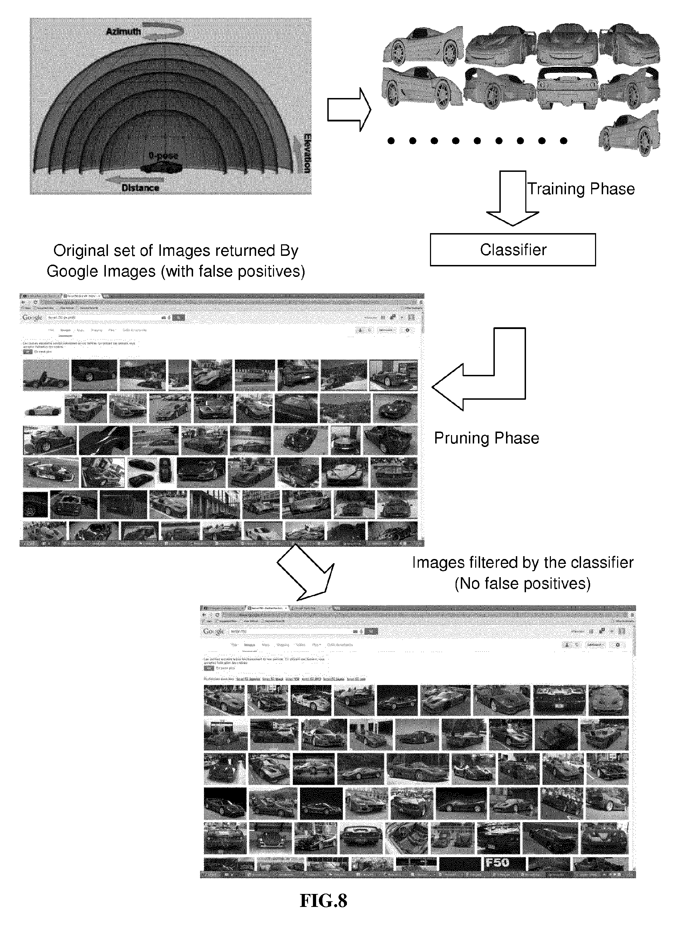

Fig.8 is a schematic view of a whole process of 2D images pruning according to the embodiments of the present application, wherein the exemplary original set of images are returned by Google Images. In Fig.8, the first range of points of view has an azimuth from 0° to 360°. However, the present disclosure is not so limited.

Additionally, when thus trained classifier is used to prune the 2D candidate images retrieved based on the text matching mechanism, additional information may be set to further train (retrain) the classifier so as to limit the 2D images presented to the user. Such additional information may include the second range of points of view which is narrower than the first range of points of view, a particular elevation, a particular color, a resolution level, or a definition level.

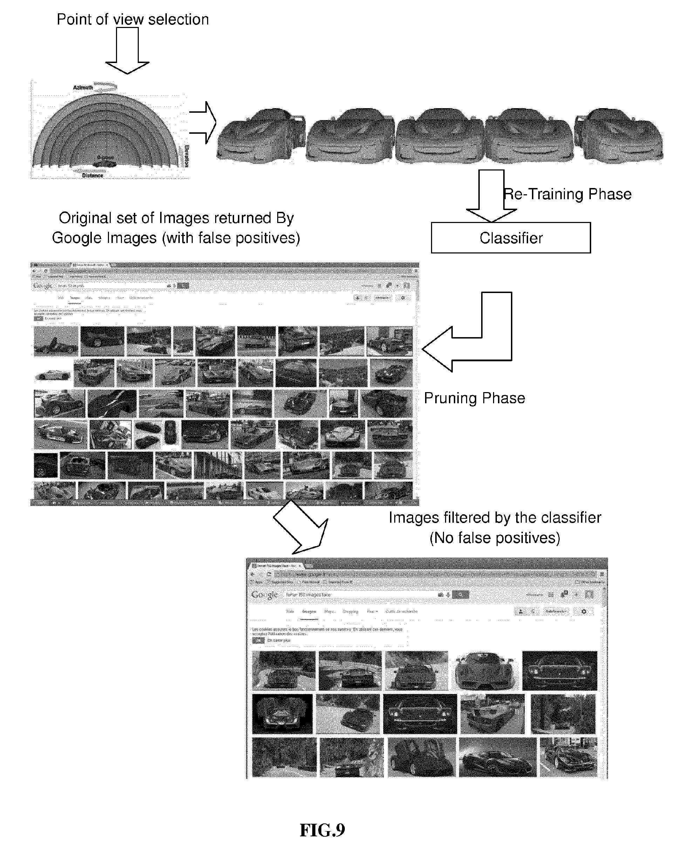

Fig.9 is a schematic view of a whole process of 2D images pruning according to the embodiments of the present application, wherein the exemplary original set of images are returned by Google Images, and the second range of points of view has an azimuth from -45°(315°) to 45° with taking the central image as an azimuth of 0°. However, the present disclosure is not so limited.

By adopting the process as shown in Fig.9, the classifier may be further trained on the fly and can be used to prune the 2D images returned by Google Images according to user's requirements.

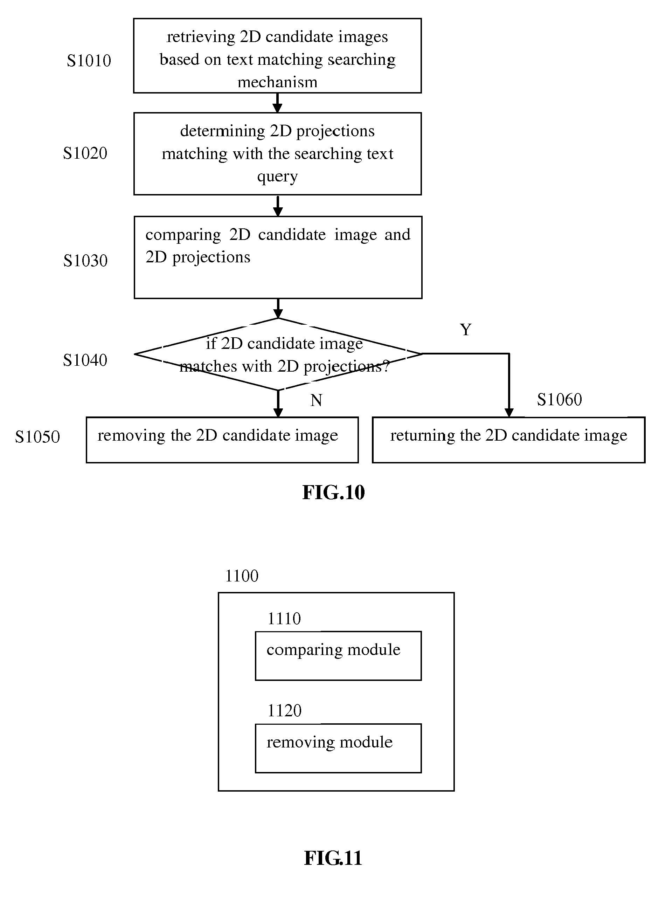

Fig.10 is a schematic flowchart of a method for returning 2D images based on text matching searching mechanism and 2D projection matching detecting mechanism performed by an internet searching engine according to one embodiment of the present disclosure.

At step S1010, the internet searching engine retrieves 2D candidate images from available images based on the text matching searching mechanism. That is, the internet searching engine retrieves 2D candidate image based on text matching between the searching text query submitted by the user and the tag included in metadata associated with each of the available images. Here, since the text matching mechanism is well known in the image searching field, details of the text matching mechanism is omitted.

At step S1020, the internet searching engine determines 2D projections matching with the searching text query. For example, after the internet searching engine creates or obtains 2D projections of a target object, it can create a tag of metadata of the group of 2D projections which includes the name or key features of the target object.

At step S1030, the internet searching engine compares each of the retrieved 2D image with each of the determined 2D projections matching with the searching text query submitted by the user.

At step S1040, the internet searching engine determines whether each particular 2D candidate image matches with any of the determined 2D projections.

If the internet searching engine determines that some particular 2D candidate images do not match with any of the determined 2D projections, the internet searching engine dismisses the particular 2D candidate images at step S1050.

At step S1060, the internet searching engine returns the 2D candidate images which match with any of the determined 2D projections.

Preferably, at step S1020, the internet searching engine determines the classifier matching with the searching text query. For example, after the internet searching engine trains a classifier based on 2D projections of 3D model of a target object, it can create a tag of metadata of the classifier which includes the name or key features of the target object. Then, at step S1030, the internet searching engine uses the classifier to detect the image matching between the 2D candidate image and the 2D projections of the 3D model of the target object. Then, at step S1040, the internet searching engine determines whether the 2D candidate image matches with any of the determined 2D projections based on the detection result of the classifier.

Additionally, at the step S1020, the internet searching engine may further receive point of view selection to limit the 2D projections of the 3D model of the target object or the classifier corresponding to the target object, so as to refine the image matching detection based on user's requirement.

Similar with the internet searching engine, the intranet searching engine and the local searching tool may perform the same method as shown in Fig.10 only with the difference of sources where the available images come from.

However, the present disclosure is not limited to the application as shown in Fig.10. Actually, the image pruning process may also be performed at the side of the end user which may be anyone interested with the target object, such a private user or a staff of a company or organization responsible for the target object.

In such circumstance, the 2D projections of the 3D model of the target object or the classifier corresponding to the target object is located in the computer of the end user. After the 2D candidate images are returned from the internet/intranet searching engine or the local searching software, the image matching process may be performed automatically or may be invoke by the end user. In this case, the step S1010 may be omitted for the computer of the end user.

Fig.11 is a schematic block diagram of an apparatus for ranking a 2D candidate image for a target object according to embodiments of the present disclosure.

The apparatus 1100 comprises comparing module 1110 and removing module 1120.

The comparing module 1110 compares the 2D candidate image with 2D projections extracted from a 3D model of the target object.

Here, still given the presumption that the 2D projections may be obtained through various ways. For example, the 2D candidate image may be returned by a searching tool which retrieves the 2D candidate image based on text matching between a searching text query submitted by a user and a tag included in metadata associated with available 2D candidate images, and the searching tool may be at least one of internet searching engine, intranet searching engine, and local searching software.

The 3D model of the target object comprises at least one of 3D model of the target object as a whole and 3D model of a constituent part of the target object, each of the 3D models comprises at least one of exterior 3D model, structural 3D model and interior 3D model. The 2D projections of the 3D model may be extracted from a first selected range of points of view. For example, referring to Fig.3, the point of view is defined by an azimuth, an elevation and a distance.

The first selected range of points of view may be defined as a particular elevation, a particular distance and a range of azimuth which may be many discrete points in a whole angle range from 0° to 360° or a partial angle range.

In a specific example, the apparatus 1100 may further comprise extracting module for extracting the 2D projections of the 3D model of the target object from a selected range of points of view.

Additionally, the image matching detection may be performed based on a preset matching rate. That is, when the matching rate between the 2D candidate image and any of the 2D projections is higher than the predefined matching rate, it can be determined that the image matching is found.

Additionally or alternatively, when a first preset percentage of the 2D candidate image matches with a second preset percentage of any of the 2D projections, it can also be determined that the image matching is found.

Alternatively, when a preset percentage of any of the 2D projections is included in the 2D candidate image, it can also be determined that the image matching is found.

Alternatively, when a preset percentage of the 2D candidate image is included in any of the 2D projections, it can also be determined that the image matching is found.

The removing module 1120 removes the 2D candidate image when the 2D candidate image does not match with any of the 2D projections.

In an example, the comparing module 1110 may further comprise training module and a classifier.

The training module trains the classifier based the 2D projections of the 3D model of a target object. Here, the training of the classifier may be preformed online or offline according to the process shown in Fig.7. For example, the classifier may be a support vector machine (SVM) classifier.

The classifier particularly detects image matching between the 2D candidate image and any of the 2D projections. For example, the classifier may be applied to detect the features of the target object on the 2D candidate image.

Additionally, when thus trained classifier is used to prune the 2D candidate images retrieved based on the text matching mechanism, additional information may be set to further train the classifier so as to limit the 2D images presented to the user. Such additional information may include the second range of points of view which is narrower than the first range of points of view.

Furthermore, according to the embodiments of the present disclosure, there is further provided a computer program product downloadable from a communication network and/or recorded on a medium readable by computer and/or executable by a processor, comprising program code instructions for implementing the steps of the method described with reference to any one of Fig.2, Fig.6, Fig.7 and Fig.10.

Furthermore, according to the embodiments of the present disclosure, there is further provided a non-transitory computer-readable medium comprising a computer program product recorded thereon and capable of being run by a processor, including program code instructions for implementing the steps of the method described with reference to any one of Fig.2, Fig.6, Fig.7 and Fig.10.

It should be appreciated that the above embodiments are only for illustrating the principle of the present disclosure, and in no way limit the scope of the present disclosure. It will be obvious that those skilled in the art may make modifications, variations and equivalences to the above embodiments without departing from the principle and scope of the present disclosure as defined by the following claims. Such variations and modifications are intended to be included within the principle and scope of the present disclosure.

## Claims

1. Method for ranking a 2D candidate image for an object, **characterized by** comprising:
comparing (210) the 2D candidate image with at least one 2D projection extracted from a 3D model of the object; and
removing (230) the 2D candidate image when the 2D candidate image does not match (220) with any of the at least one 2D projection.

2. Method of claim 1, wherein the 3D model of the object comprises at least one of 3D model of the object as a whole and 3D model of a constituent part of the object, each of the 3D models comprises at least one of exterior 3D model, structural 3D model and interior 3D model.

3. Method of claim 1, before said comparing, further comprising:
extracting at least one 2D projection of the 3D model of the object from a first selected range of points of view.

4. Method of claim 1 or 3, wherein said comparing the 2D candidate image with the at least one 2D projection comprises:
training (S610) a classifier based on the at least one 2D projection; and
applying (S620) the classifier to detect any of the at least one 2D projection on the 2D candidate image.

5. Method of claim 4, wherein said applying (S620) the classifier to detect any of the at least one 2D projection on the 2D candidate image comprises:
setting the classifier based on a second selected range of points of view, wherein the second selected range is narrower than the first selected range.

6. Method of claim 4, wherein said classifier is a support vector machine classifier.

7. Method of claim 1, wherein said 2D candidate image is returned by a searching tool which retrieves the 2D candidate image based on text matching between a searching text query submitted by a user and a tag included in metadata associated with available 2D candidate images.

8. Apparatus for ranking a 2D candidate image for an object, **characterized by** comprising:
a comparing module (1110) for comparing the 2D candidate image with at least one 2D projection extracted from a 3D model of the object; and
a removing module (1120) for removing the 2D candidate image when the 2D candidate image does not match with any of the at least one 2D projection.

9. Apparatus of claim 8, wherein the 3D model of the object comprises at least one of 3D model of the object as a whole and 3D model of a constituent part of the object, each of the 3D models comprises at least one of exterior 3D model, structural 3D model and interior 3D model.

10. Apparatus of claim 8, further comprising:
an extracting module for extracting the at least one 2D projection of the 3D model of the object from a selected range of points of view.

11. Apparatus of claim 8, wherein said comparing module for comparing the 2D candidate image with the at least one 2D projection comprises:
a training module for training a classifier based on the at least one 2D projection; and
the classifier for detect any of the at least one 2D projection on the 2D candidate image.

12. Apparatus of claim 11, wherein said classifier is a support vector machine (SVM) classifier.

13. Apparatus of claim 8, wherein said 2D candidate image is returned by a searching tool which retrieves the 2D candidate image based on text matching between a searching text query submitted by a user and a tag included in metadata associated with available 2D candidate images.

14. Computer program product downloadable from a communication network and/or recorded on a medium readable by computer and/or executable by a processor, comprising program code instructions for implementing the steps of a method according to at least one of claims 1 to 7.

15. Non-transitory computer-readable medium comprising a computer program product recorded thereon and capable of being run by a processor, including program code instructions for implementing the steps of a method according to at least one of claims 1 to 7.
